# EUROPEAN PATENT SPECIFICATION

(11) **EP 3 266 841 B1**
(45) Date of publication and mention of the grant of the patent: **10.11.2021**
(21) Application number: 16758662.7
(22) Date of filing: 07.01.2016
(51) Int. Cl.: C09D 127/16, B05D 7/24, C09D 5/03, C09D 127/12, C09D 133/04, C09D 163/00, C09D 167/00, C09D 175/04

(54) **COMPOSITION FOR POWDER COATING MATERIAL, POWDER COATING MATERIAL AND COATED ARTICLE**
ZUSAMMENSETZUNG FÜR PULVERBESCHICHTUNGSMATERIAL, PULVERBESCHICHTUNGSMATERIAL UND BESCHICHTETER ARTIKEL
COMPOSITION POUR MATÉRIAU DE REVÊTEMENT EN POUDRE, MATÉRIAU DE REVÊTEMENT EN POUDRE ET ARTICLE REVÊTU

(30) Priority: 02.03.2015 JP 2015040534
(43) Date of publication of application: 10.01.2018
(73) Proprietor: AGC Inc., Tokyo 100-8405 (JP)
(72) Inventor: OCHI, Shuhei, Tokyo 100-8405 (JP); AIKAWA, Masataka, Tokyo 100-8405 (JP); SAITO, Shun, Tokyo 100-8405 (JP)
(74) Representative: Müller-Boré & Partner Patentanwälte PartG mbB
(86) International application number: PCT/JP2016/050375
(87) International publication number: WO 2016/139966

(56) References cited:
- WO-A1-00/09597
- WO-A1-00/69983
- WO-A1-2007/132736
- WO-A1-2015/190462
- WO-A2-02/50929
- WO-A2-2006/091321
- JP-A- 2003 096 378
- JP-A- 2006 002 034
- JP-A- 2012 041 383
- JP-A- 2014 118 458
- US-A- 5 030 394
- US-A- 5 030 394
- US-A- 6 063 855
- DATABASE CA [Online] CHEMICAL ABSTRACTS SERVICE, COLUMBUS, OHIO, US; MULIN, YU. A. ET AL: "Protective coatings made of powdered poly(vinyl", XP002782655, retrieved from STN Database accession no. 1980:112325
- DATABASE CA [Online] CHEMICAL ABSTRACTS SERVICE, COLUMBUS, OHIO, US; SAITO, SHUN ET AL: "Fluorine -containing powder coating for", XP002782656, retrieved from STN Database accession no. 2015:2022319 & WO 2015/190462 A1 (ASAHI GLASS CO LTD [JP]) 17 December 2015 (2015-12-17)
- DATABASE CA [Online] CHEMICAL ABSTRACTS SERVICE, COLUMBUS, OHIO, US; YANG, ZHENSHENG ET AL: "Preparation of highly hydrophobic microporous membrane", XP002782657, retrieved from STN Database accession no. 2013:1373551 & CN 103 272 484 A (UNIV HEBEI TECHNOLOGY) 4 September 2013 (2013-09-04)
- DATABASE CA [Online] CHEMICAL ABSTRACTS SERVICE, COLUMBUS, OHIO, US; JIN, CHUANG ET AL: "Modified fluororesin chip used for preparing solar photovoltaic back film, and its preparation method", XP002782658, retrieved from STN Database accession no. 2012:477522 & CN 102 391 596 A (SUZHOU SIDIKE STICKINESS ELECTRON STUFF CO LTD) 28 March 2012 (2012-03-28)
- DATABASE CA [Online] CHEMICAL ABSTRACTS SERVICE, COLUMBUS, OHIO, US; LI, XIN ET AL: "Electrode and core for lithium-ion batteries, and manufacturing method for core", XP002782659, retrieved from STN Database accession no. 2008:398110 & CN 101 150 182 A (SHENZHEN BIKE BATTERY CO LTD [CN]) 26 March 2008 (2008-03-26)
- DATABASE CA [Online] CHEMICAL ABSTRACTS SERVICE, COLUMBUS, OHIO, US; SAITO, SHUN ET AL: "Powder coating composition, process for producing powder coating composition, and coated article", XP002782660, retrieved from STN Database accession no. 2017:1154083 & WO 2017/119373 A1 (ASAHI GLASS CO LTD [JP]) 13 July 2017 (2017-07-13)

## Description

The present invention relates to a composition for powder coating material, a powder coating material and a coated article.

As a coating material, a powder coating material is widely used recently which contains no organic solvent at all, requires no exhaust treatment or waste treatment, and further can be recovered for reuse, and which presents a very low environmental load.

As a raw material for such a powder coating material, an acrylic resin, a polyester resin, an epoxy resin or the like is mainly used. However, a coating film formed by a powder coating material using such a raw material is poor in weather resistance. Therefore, as a powder coating material capable of forming a coating film excellent in weather resistance, a powder coating material containing a fluororesin is attracting attention.

Further, in recent years, the application range of the powder coating material containing a fluororesin has been expanded to exterior materials of buildings, such as sashes (window frames, etc.), curtain walls, etc. Therefore, a powder coating material containing a fluororesin is desired which is capable of forming a coating film excellent in appearance and surface smoothness.

As a powder coating material containing a fluororesin which is capable of forming a coating film excellent in appearance and surface smoothness, for example, the following powder coating material has been proposed.

A powder coating material containing a fluorinated copolymer having fluoroolefin units, specific vinyl ether units and/or vinyl ester units (Patent Documents 1 and 2).
Patent Document 1: WO 2007/132736
Patent Document 2: WO 2002/100956

However, the coating film formed by the powder coating material disclosed in Patent Documents 1 and 2 is still insufficient in coating film appearance and surface smoothness. Especially when the coating area is increased, poor surface smoothness of the coating film becomes conspicuous. Therefore, the powder coating material disclosed in Patent Documents 1 and 2 is used for coating of an inconspicuous member having a small coating area, such as a sash.

Further, Mulin et al. "Protective coatings made of powdered poly(vinyl fluoride)", Plasticheskie Massy (1980), (1), 41, discloses a powder coating which comprises a powdered poly(vinyl fluoride) and 5 to 20% dimethyl phthalate.

An object of the present invention is to provide a composition for powder coating material, whereby it is possible to obtain a powder coating material capable of forming a coating film excellent in weather resistance, coating film appearance and surface smoothness; a powder coating material capable of forming a coating film excellent in weather resistance, coating film appearance and surface smoothness; and a coated article having a coating film excellent in weather resistance, coating film appearance and surface smoothness, on its surface.

The present invention provides a composition for powder coating material, a powder coating material and a coated article, having the following constructions.
[1] A composition for powder coating material characterized by comprising a fluororesin having a fluorine content of at least 10 mass% and a plasticizer having a melting point of from 60 to 200°C and having a cyclic hydrocarbon group in the molecule, wherein
   the content of the plasticizer is from 0.1 to 40 parts by mass, to 100 parts by mass of the resin component contained in the composition for powder coating material.
[2] The composition for powder coating material according to [1], which further contains a resin other than the fluororesin.
[3] The composition for powder coating material according to [2], wherein the resin other than the fluororesin, is at least one member selected from the group consisting of a fluororesin having a fluorine content of less than 10 mass%, an acrylic resin, a polyester resin, a polyurethane resin, an epoxy resin and a silicone resin.
[4] The composition for powder coating material according to any one of [1] to [3], wherein the fluororesin having a fluorine content of at least 10 mass%, is a fluororesin having hydroxy groups or carboxy groups.
[5] The composition for powder coating material according to [4], which further contains a curing agent.
[6] The composition for powder coating material according to any one of [1] to [3], wherein the fluororesin having a fluorine content of at least 10 mass%, is a polyvinylidene fluoride.
[7] A powder coating material comprising a powder composed of the composition for powder coating material as defined in any one of [1] to [6].
[8] The powder coating material according to [7], wherein the powder coating material comprises said powder and a luster pigment.
[9] A coated article having a coating film formed of the powder coating material as defined in [7] or [8], on the surface of a substrate.
[10] The coated article according to [9], wherein the 60 degree specular gloss of the coating film is from 10 to 90%.
[11] The coated article according to [9] or [10], wherein the material of the substrate is aluminum or an alloy thereof.

According to the composition for powder coating material of the present invention, it is possible to obtain a powder coating material capable of forming a coating film excellent in weather resistance, coating film appearance and surface smoothness.

According to powder coating material of the present invention, it is possible to form a coating film excellent in weather resistance, coating film appearance and surface smoothness.

The coated article of the present invention has a coating film excellent in weather resistance, coating film appearance and surface smoothness, on its surface.

In this specification, the meanings of the following terms are as follows.

A "fluororesin" means a resin having fluorine atoms in the molecule. Among fluororesins, a "fluororesin having a fluorine content of at least 10 mass%" will be hereinafter referred to as a "fluororesin (A)".

A "plasticizer" means a compound which has compatibility with a resin and which imparts flexibility to the resin. Among plasticizers, a "plasticizer having a melting point of from 60 to 200°C and having a cyclic hydrocarbon group in the molecule" will be hereinafter referred to as a "plasticizer (B)".

A resin for powder coating material other than the fluororesin (A) will be hereinafter referred to as a "resin (C)".

The "resin component" of the composition for powder coating material means the fluororesin (A) and the resin (C) contained in the composition for powder coating material.

The term "dry blending" means mixing two or more powders without melting the powders and without adding a solvent.

A "(meth)acrylate" is a generic term for an acrylate and a methacrylate.

A "unit" is present in a polymer to constitute the polymer, and it refers to a moiety derived from a monomer. Further, one having the structure of a certain unit chemically converted after forming a polymer will also be called a unit. Hereinafter, in some cases, a unit derived from an individual monomer will be referred to by a name having "unit" attached to the monomer name.

The "melting point" is the temperature at the melting peak as measured by a differential scanning calorimetry (DSC) method.

The "glass transition temperature" is the midpoint glass transition temperature measured by a DSC method.

The "number average molecular weight" and "mass average molecular weight" are values obtained as calculated as polystyrene by a gel permeation chromatography (GPC) method.

The "hydroxy value" is a value measured in accordance with JIS K 0070: 1992.

The "acid value" is a value measured in accordance with JIS K 5601-2-1: 1999.

The "60 degree specular gloss" is a value measured in accordance with JIS K 8741: 1997 (ISO 2813: 1994, ISO 7668: 1986).

### [Composition for powder coating material]

The composition for powder coating material of the present invention (hereinafter, also referred to as the "composition (1)") comprises a fluororesin (A) and a plasticizer (B).

The composition (1) may further contain a resin (C), a curing agent, a curing catalyst, and components other than these (hereinafter referred to also as "other components"), as the case requires.

By using the composition (1), it is possible to produce a powder (X1) to be described later. The powder (X1) may be used directly as a powder coating material (I) to be described later, or the powder (X1) may be mixed with other components (e.g. other powder) and used as a mixed powder coating material.

Now, each component contained in the composition (1), and each component optionally contained such as the resin (C), will be described, and each of these components may be likewise used also in the powder coating material (I) and the powder coating material (II), in the powder coating material of the present invention as described later.

### (Fluororesin (A))

The fluorine content of the fluororesin (A) is at least 10 mass%, more preferably at least 15 mass%, further preferably at least 20 mass%, particularly preferably at least 25 mass%. Further, the fluorine content is preferably at most 80 mass%, more preferably at most 70 mass%. When the fluorine content of the fluororesin (A) is at least the lower limit value in the above range, weather resistance of the coating film will be further excellent. When the fluorine content of the fluororesin (A) is at most the upper limit value in the above range, surface smoothness of the coating film will be excellent.

The fluorine content is usually dependent on the content of fluoroolefin units. However, it is also possible to increase or decrease the content by a polymer reaction after once producing a fluororesin.

The fluorine content in the fluororesin (A) can be measured by nuclear magnetic resonance (NMR) analysis.

The fluororesin (A) may, for example, be a homopolymer or copolymer of a fluoroolefin. The copolymer may, for example, be a copolymer of at least two fluoroolefins, a copolymer of at least one fluoroolefin and at least one fluorinated monomer other than a fluoroolefin, a copolymer of at least one fluoroolefin and at least one monomer having no fluorine atom, or a copolymer of at least one fluoroolefin, at least one fluorinated monomer other than a fluoroolefin, and at least one monomer having no fluorine atom. As the fluororesin (A), one type may be used alone, or two or more types may be used in combination.

A fluoroolefin is a compound having at least one hydrogen atom in a hydrocarbon olefin (general formula: CₙH₂ₙ) substituted by a fluorine atom.

The number of carbon atoms in the fluoroolefin is preferably from 2 to 8, more preferably from 2 to 4, particularly preferably 2.

The proportion of the number of fluorine atoms to the total number of fluorine and hydrogen atoms in the fluoroolefin is preferably at least 25%, more preferably at least 50%, and it may be 100%. When the number of fluorine atoms is at least 25%, it is easy to form a coating film having excellent weather resistance. In a fluoroolefin, at least one hydrogen atom not substituted by a fluorine atom may be substituted by a chlorine atom. When a fluoroolefin has chlorine atom(s), it becomes easy to disperse a pigment in the fluororesin (A). Further, the glass transition temperature of the fluororesin (A) is preferably at least 30°C, and under such a temperature condition, it is possible to suppress blocking of the coating film.

The fluoroolefin is preferably at least one member selected from the group consisting of tetrafluoroethylene (hereinafter also referred to as "TFE"), chlorotrifluoroethylene (hereinafter also referred to as "CTFE"), hexafluoropropylene, vinylidene fluoride and vinyl fluoride, and it is particularly preferably TFE, CTFE or vinylidene fluoride.

As the fluoroolefin, one type may be used alone, or two or more types may be used in combination.

The fluoroolefin units are preferably units formed directly by polymerization of a fluoroolefin.

The fluorinated monomer other than a fluoroolefin may, for example, be a fluoro (alkyl vinyl ether), or a perfluoro (alkyl vinyl ether).

The monomer having no fluorine atom may, for example, be a monomer having a hydroxy group, or a vinyl monomer, as will be described later.

The fluororesin (A) may, for example, be polyvinylidene fluoride (hereinafter also referred to as "PVDF"), or a fluorinated polymer having a reactive group which will be described later.

Such a fluororesin (A) may be a polymer which may further has other monomer units, as the case requires, within a range not to impair the essential properties thereof.

Other monomers are monomers other than a monomer (for example, vinylidene fluoride in PVDF) to form the essential units as units constituting the fluororesin (A).

Among fluororesins other than PVDF, as other monomer, particularly preferred is vinylidene fluoride, whereby a fluororesin (A) will be excellent in adhesion to a substrate (in particular an aluminum substrate), and fixing to an aluminum curtain wall by an sealing agent will be easy.

The melting point of the fluororesin (A) is preferably from 60 to 300°C, more preferably from 70 to 200°C, particularly preferably from 80 to 180°C. When the melting point of the fluororesin (A) is at most the upper limit value in the above range, the melt viscosity of the molten film tends to be easily low, and the coating film will be further excellent in coating film appearance and surface smoothness.

As the fluororesin (A), PVDF is preferred from the viewpoint of excellent flexibility and impact resistance of the coating film. The preferred number average molecular weight of PVDF is from 5,000 to 1,000,000.

As the fluororesin (A), from the viewpoint of the antifouling property, water resistance, acid resistance and alkali resistance, a fluorinated polymer having reactive groups is preferred. As the reactive groups, hydroxy groups, carboxy groups, or amino groups may be mentioned. Such a fluorinated polymer may have two or more types of reactive groups.

As the fluororesin (A), particularly preferred is a fluorinated polymer containing hydroxy groups (hereinafter a "hydroxy group-containing fluorinated polymer (A)" may also be referred to as a "fluorinated polymer (A1)") or a fluorinated polymer containing carboxy groups (hereinafter a "carboxy group-containing fluorinated polymer (A)" may also be referred to as a "fluorinated polymer (A2)"). The fluorinated polymer (A1) and the fluorinated polymer (A2) contain hydroxy groups and carboxy groups, respectively, whereby they are excellent in curing speed, when the respective compositions for powder coating material contain an isocyanate-type curing agent (especially a blocked isocyanate curing agent), as the after-described curing agent. Further, for example, it is thereby easy to disperse titanium oxide pigment, such being preferred in that a coating film with a high gloss is obtainable.

### <Fluorinated polymer (A1)>

As the fluorinated polymer (A1), preferred is a hydroxy group-containing fluorinated polymer having fluoroolefin units, units of a monomer having a hydroxy group (hereinafter referred to as a "monomer (m1)") copolymerizable with the fluoroolefin, and, as the case requires, units of a monomer (hereinafter referred to as a "monomer (m2)") other than a fluoroolefin and a monomer (m1).

The fluorinated polymer (A1) may be a hydroxy group-containing fluorinated polymer having hydroxy groups introduced by conversion of reactive groups of a polymer. As the hydroxy group-containing fluorinated polymer, preferred is a fluorinated polymer obtainable by reacting a fluorinated polymer having fluoroolefin units, monomer units having reactive functional groups other than hydroxy groups and, as the case requires, the above mentioned monomer (m2) units, with a compound having a hydroxy group and a second reactive functional group reactive with the above reactive functional groups.

The monomer (m1) or monomer (m2) to be copolymerized with a fluoroolefin may be a monomer having a fluorine atom other than a fluoroolefin, but is preferably a monomer having no fluorine atom.

The monomer (m1) is a monomer having a hydroxy group.

The monomer having a hydroxy group may, for example, be allyl alcohol, a hydroxyalkyl vinyl ether (e.g. 2-hydroxyethyl vinyl ether, 4-hydroxybutyl vinyl ether, cyclohexanediol monovinyl ether), a hydroxyalkyl allyl ether (e.g. 2-hydroxyethyl allyl ether), a hydroxy alkanoic acid vinyl (e.g. hydroxypropionic acid vinyl), or a hydroxyalkyl (meth)acrylate (e.g. hydroxyethyl (meth)acrylate).

As the monomer (m1), one type may be used alone, or two or more types may be used in combination.

The monomer (m2) is preferably a vinyl-type monomer, i.e. a compound having a carbon-carbon double bond. A vinyl-type monomer is excellent in alternating copolymerizability with a fluoroolefin and thus a polymerization yield of a fluorinated polymer will be thereby high. Further, even when remained to be unreacted, it presents less influence to the coating film, and can be easily removed in the production process.

The vinyl-type monomer may, for example, be a vinyl ether, an allyl ether, a carboxylic acid vinyl ester, a carboxylic acid allyl ester, an olefin, or an unsaturated carboxylic acid ester.

As the monomer (m2), one type may be used alone, or two or more types may be used in combination.

The vinyl ether may, for example, be a cycloalkyl vinyl ether (e.g. cyclohexyl vinyl ether (hereinafter also referred to as "CHVE")), or an alkyl vinyl ether (e.g. nonyl vinyl ether, 2-ethylhexyl vinyl ether, hexyl vinyl ether, ethyl vinyl ether, n-butyl vinyl ether, or tert-butyl vinyl ether).

The allyl ether may, for example, be an alkyl allyl ether (e.g. ethyl allyl ether, or hexyl allyl ether).

The carboxylic acid vinyl ester may, for example, be a vinyl ester of a carboxylic acid (e.g. acetic acid, butyric acid, pivalic acid, benzoic acid, propionic acid, or versatic acid). Further, as a vinyl ester of a carboxylic acid having a branched alkyl group, VeoVa 9 (trade name) or VeoVa 10 (trade name) manufactured by Shell Chemical, may be used.

The carboxylic acid allyl ester may, for example, be an allyl ester of a carboxylic acid (e.g. acetic acid, butyric acid, pivalic acid, benzoic acid, propionic acid, or versatic acid).

The olefin may, for example, be ethylene, propylene, or isobutylene.

The unsaturated carboxylic acid ester may, for example, be methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-amyl (meth)acrylate, isoamyl (meth)acrylate, n-hexyl (meth)acrylate, isohexyl (meth)acrylate, 2-ethylhexyl (meth)acrylate, or lauryl (meth)acrylate.

As the monomer (m2), preferred is a cycloalkyl vinyl ether, and particularly preferred is CHVE, since it is thereby possible to design the glass transition temperature of a fluorinated polymer (A1) to be at least 30°C and to prevent blocking of the coating film.

As the monomer (m2), from such a viewpoint that the coating film will be excellent in flexibility, preferred is an alkyl vinyl ether or vinyl carboxylate having a linear or branched alkyl group having at least 3 carbon atoms.

As the monomer (m2), more preferred is a combined use of at least one of the alkyl vinyl ether and the vinyl carboxylate, and the cycloalkyl vinyl ether.

As the combination of monomers to constitute the fluorinated polymer (A1), from the viewpoint of excellent weather resistance as well as adhesion, flexibility, and blocking resistance, preferred is the following combination (1), and particularly preferred is the following combination (2) or (3).

### Combination (1)

Fluoroolefin: TFE or CTFE,

Monomer (m1): hydroxyalkyl vinyl ether,

Monomer (m2): at least one member selected from a cycloalkyl vinyl ether, an alkyl vinyl ether and a carboxylic acid vinyl ester.

### Combination (2)

Fluoroolefin: CTFE,

Monomer (m1): hydroxyalkyl vinyl ether,

Monomer (m2): CHVE and ethyl vinyl ether.

### Combination (3)

Fluoroolefin: CTFE,

Monomer (m1): hydroxyalkyl vinyl ether,

Monomer (m2): tert-butyl vinyl ether and vinyl pivalate.

Like the combination (2), in a case where the fluorinated polymer (A1) is a copolymer having fluoroolefin units and vinyl ether units, with a high alternating copolymerizability of the fluoroolefin and the vinyl ether, by adjusting the number average molecular weight as described hereinafter, it is possible to easily lower the melt viscosity of a molten film, and to readily obtain a coating film excellent in coating film appearance and surface smoothness.

Like the combination (3), in a case where the fluorinated polymer (A1) is a copolymer having fluoroolefin units, vinyl ether units and vinyl ester units, with a high alternating copolymerizability of the fluoroolefin and the (vinyl ether/vinyl ester), by using tert-butyl vinyl ether as the vinyl ether, it is possible to easily lower the melt viscosity of a molten film, and to readily obtain a coating film excellent in coating film appearance and surface smoothness.

The proportion of fluoroolefin units is preferably from 30 to 70 mol%, particularly preferably from 40 to 60 mol%, among all units (100 mol%) in the fluorinated polymer (A1). When the proportion of fluoroolefin units is at least the lower limit value in the above range, the coating film will be excellent in weather resistance. When the proportion of fluoroolefin units is at most the upper limit value in the above range, the coating film will be more excellent in antifouling properties, water resistance, acid resistance and alkali resistance. Further, when the proportion of fluoroolefin units is within the above range, it will be easy to control the curing rate at the time of forming a coating film, and to obtain a coating film excellent in coating film appearance and surface smoothness.

The proportion of monomer (m1) units is preferably from 0.5 to 20 mol%, particularly preferably from 1 to 15 mol%, among all units (100 mol%) in the fluorinated polymer (A1). When the proportion of monomer (m1) units is at least the lower limit value in the above range, the coating film will be more excellent in antifouling properties, water resistance, acid resistance and alkali resistance. When the proportion of the monomer (m1) units is at most the upper limit value in the above range, the coating film will be excellent in scratch resistance. Further, if the proportion of the monomer (m1) units within the above range, it will be easy to lower the melt viscosity of a molten film, and to form a coating film excellent in coating film appearance and surface smoothness.

The proportion of monomer (m2) units is preferably from 20 to 60 mol%, particularly preferably from 30 to 50 mol%, among all units (100 mol%) in the fluorinated polymer (A1). When the proportion of the monomer (m2) units is at least the lower limit value in the above range, the glass transition temperature of the fluorinated polymer (A1) will be proper, and it will be easy to produce a powder coating material. When the proportion of the monomer (m2) units is at most the upper limit value in the above range, blocking of the coating film will be further suppressed, and flexibility will be further improved. Further, when the proportion of the monomer (m2) units is within the above range, it will be easy to lower the melt viscosity of a molten film, and to obtain a coating film excellent in coating film appearance and surface smoothness.

The number average molecular weight of the fluorinated polymer (A1) is preferably from 3,000 to 50,000, more preferably from 5,000 to 30,000. When the number average molecular weight of the fluorinated polymer (A1) is at least the lower limit value in the above range, the coating film will be excellent in water resistance and salt water resistance. When the number average molecular weight of the fluorinated polymer (A1) is at most the upper limit value in the above range, the coating film will be further excellent in film coating appearance and surface smoothness.

In a case where the fluorinated polymer (A1) is, like in the combination (2), a copolymer with high alternating copolymerizability of a fluoroolefin and a vinyl ether, when the number average molecular weight of the fluorinated polymer (A1) is at most 9,500, it will be easy to lower the melt viscosity of a molten film. From the viewpoint of the melt viscosity, the number average molecular weight of the fluorinated polymer (A1) is more preferably at most 8,500, particularly preferably at most 7,500.

The hydroxy value of the fluorinated polymer (A1) is preferably from 5 to 100 mgKOH/g, more preferably from 10 to 80 mgKOH/g. When the hydroxy value of the fluorinated polymer (A1) is at least the lower limit value in the above range, the coating film will be more excellent in antifouling properties, water resistance, acid resistance and alkali resistance. When the hydroxy value of the fluorinated polymer (A1) is at most the upper limit value in the above range, the coating film will be excellent in crack resistance under temperature cycles between a high temperature of at least 100°C and a low temperature of at most 10°C.

The glass transition temperature of the fluorinated polymer (A1) is preferably from 30 to 150°C, more preferably from 30 to 120°C, particularly preferably from 33 to 100°C. When the glass transition temperature of the fluorinated polymer (A1) is at least the lower limit value in the above range, it is easy to produce a powder coating material. When the glass transition temperature of the fluorinated polymer (A1) is at most the upper limit value in the above range, it will be easy to lower the melt viscosity of a molten film, and to obtain a coating film excellent in coating film appearance and surface smoothness.

### <Fluorinated polymer (A2)>

As the fluorinated polymer (A2), the following may be mentioned.
- A carboxy group-containing fluorinated polymer (hereinafter referred to as "fluorinated polymer (A21)") having carboxy groups introduced by reacting hydroxy groups in a fluorinated polymer (A1) with an acid anhydride.
- A carboxy group-containing fluorinated polymer (hereinafter referred to as "fluorinated polymer (A22)") obtained by copolymerizing a fluoroolefin, a monomer (hereinafter referred to as "monomer (m3)") having a carboxy group copolymerizable with the fluoroolefin, and a monomer (hereinafter referred to as "monomer (m4)") other than the fluoroolefin and the monomer (m3).

### <Fluorinated polymer (A21)>

The fluorinated polymer (A21) is obtained, for example, by the following method.

• A method of reacting hydroxy groups of a fluorinated polymer (A1) with an acid anhydride in an organic solvent to form ester bonds and carboxy groups.

• A method of melt-kneading a fluorinated polymer (A1) and an acid anhydride, to react hydroxy groups of the fluorinated polymer (A1) with an acid anhydride to form ester bonds and carboxy groups.

Carboxy groups in the fluorinated polymer (A21) obtained by such a method, are derived from the acid anhydride. The fluorinated polymer (A21) may have hydroxy groups derived from a fluorinated polymer (A1) as the raw material.

In a case where unreacted raw materials (the fluorinated polymer (A1) and the acid anhydride) are contained in the composition for powder coating material, such unreacted raw materials will be handled as fluorinated polymer (A21).

As the acid anhydride, a dibasic acid anhydride may be mentioned.

The dibasic acid anhydride may, for example, be succinic acid anhydride, glutaric acid anhydride, itaconic anhydride, 1,2-cyclohexanedicarboxylic acid anhydride (hexahydrophthalic anhydride), anhydrous cis-4-cyclohexene-1,2-dicarboxylic acid, phthalic anhydride, 4-methylhexahydrophthalic anhydride, 1,8-naphthalic anhydride, maleic acid anhydride, or 5-norbornene-2,3-dicarboxylic anhydride.

The glass transition temperature of the fluorinated polymer (A21) is preferably from 30 to 150°C, more preferably from 35 to 120°C, particularly preferably from 35 to 100°C. When the glass transition temperature of the fluorinated polymer (A21) is at least the lower limit value in the above range, it will be easy to produce a powder coating material. When the glass transition temperature of the fluorinated polymer (A21) is at most the upper limit value in the above range, it will be easy to lower the melt viscosity of a molten film, and to obtain a coating film excellent in coating film appearance and surface smoothness.

### <Fluorinated polymer (A22)>

The fluorinated polymer (A22) is one obtained by copolymerizing a fluoroolefin, a monomer (m3) having a carboxy group and another monomer (m4).

The monomer (m3) or the monomer (m4) to be copolymerized with the fluoroolefin may be a monomer having a fluorine atom other than the fluoroolefin, but is preferably a monomer having no fluorine atom.

The monomer (m3) may, for example, be a monomer such as acrylic acid, methacrylic acid, crotonic acid, isocrotonic acid, 10-undecylenic acid (undecenoic acid), 9-octadecenoic acid (oleic acid), fumaric acid, or maleic acid, and, from the viewpoint of excellent copolymerizability with the fluoroolefin, 10-undecylenic acid is preferred. As the monomer (m3), one type may be used alone, or two or more types may be used in combination.

As the monomer (m4), a vinyl-type monomer, i.e. a compound having a carbon-carbon double bond, is preferred. The vinyl-type monomer is excellent in alternating copolymerizability with the fluoroolefin, whereby the polymerization yield of a fluorinated polymer is high. Further, even when remained to be unreacted, it presents less influence on the coating film and can be easily removed in the production process. Further, the monomer (m4) may be a monomer having a functional group, such as a monomer having a hydroxy group.

The vinyl-type monomer may, for example, be a vinyl ether, an allyl ether, a carboxylic acid vinyl ester, a carboxylic acid allyl ester, an olefin or an unsaturated carboxylic acid ester.

As the vinyl ether, one exemplified as the monomer (m1) or the monomer (m2) may be mentioned.

As the allyl ether, one exemplified as the monomer (m1) or the monomer (m2) may be mentioned.

As the carboxylic acid vinyl ester, one exemplified as the monomer (m1) or the monomer (m2) may be mentioned.

As the carboxylic acid allyl ester, one exemplified as the monomer (m2) may be mentioned.

As the olefin, one exemplified as the monomer (m2) may be mentioned.

As the unsaturated carboxylic acid ester, one exemplified as the monomer (m1) or the monomer (m2) may be mentioned.

As the monomer (m4), one type may be used alone, or two or more types may be used in combination.

The combination of monomers to constitute a fluorinated polymer (A22) is preferably the following combination (4), particularly preferably the following combination (5).

### Combination (4)

Fluoroolefin: TFE or CTFE,

Monomer (m3): acrylic acid or methacrylic acid,

Monomer (m4): 2-hydroxyethyl allyl ether, carboxylic acid vinyl ester and an unsaturated carboxylic acid ester.

### Combination (5)

Fluoroolefin: CTFE,

Monomer (m3): acrylic acid,

Monomer (m4): 2-hydroxyethyl allyl ether, vinyl acetate, vinyl versatate and methyl acrylate.

Like the combination (4) or (5), in a case where the allyl ether and vinyl ester are used as the monomer (m4), the obtainable fluorinated polymer (A22) will be a copolymer having a high alternating copolymerizability of the fluoroolefin and the (allyl ether/vinyl ester). In this manner, in a case where tert-butyl vinyl ether is not used as the monomer (m4), by using acrylic acid or methacrylic acid, it is easy to lower the melt viscosity of a molten film, and to obtain a coating film excellent in coating film appearance and surface smoothness.

The proportion of fluoroolefin units is preferably from 30 to 70 mol%, particularly preferably from 40 to 60 mol%, among all units (100 mol%) in the fluorinated polymer (A22). When the proportion of fluoroolefin units is at least the lower limit value in the above range, the coating film will be excellent in weather resistance. When the proportion of fluoroolefin units is at most the upper limit value in the above range, the coating film will be more excellent in antifouling properties, water resistance, acid resistance and alkali resistance. Further, when the proportion of fluoroolefin units is within the above range, it will be easy to lower the melt viscosity of a molten film, and to obtain a coating film excellent in coating film appearance and surface smoothness.

The proportion of monomer (m3) units is preferably from 0.5 to 20 mol%, particularly preferably from 1 to 15 mol%, among all units (100 mol%) of the fluorinated polymer (A22). When the proportion of the monomer (m3) units is at least the lower limit value in the above range, the coating film will be more excellent in antifouling properties, water resistance, acid resistance and alkali resistance. When the proportion of monomer (m3) units is at most the upper limit value in the above range, the coating film will be excellent in scratch resistance. Further, when the proportion of monomer (m3) units is within the above range, it will be easy to lower the melt viscosity of a molten film, and to obtain a coating film excellent in coating film appearance and surface smoothness.

The proportion of monomer (m4) units is preferably from 20 to 60 mol%, particularly preferably from 30 to 50 mol%, among all units (100 mol%) in the fluorinated polymer (A22). When the proportion of monomer (m4) units is at least the lower limit value in the above range, the glass transition temperature of the fluorinated polymer (A22) will be proper, and it will be easy to produce a powder coating material. When the proportion of monomer (m4) units is at most the upper limit value in the above range, blocking of the coating film will be further suppressed, and the coating film will be further excellent in flexibility. Further, when the proportion of monomer (m4) units is within the above range, it will be easily to lower the melt viscosity of a molten film, and to obtain a coating film excellent in coating film appearance and surface smoothness.

The number average molecular weight of the fluorinated polymer (A22) is preferably from 3,000 to 50,000, more preferably from 5,000 to 30,000. When the number average molecular weight of the fluorinated polymer (A22) is at least the lower limit value in the above range, the coating film will be excellent in water resistance and salt water resistance. When the number average molecular weight of the fluorinated polymer (A22) is at most the upper limit value in the above range, it will be easy to lower the melt viscosity of a molten film, and to obtain a coating film excellent in coating film appearance and surface smoothness.

### (Plasticizer (B))

The plasticizer (B) is a plasticizer having a melting point of from 60 to 200°C and having a cyclic hydrocarbon group in the molecule.

As the plasticizer (B), one type may be used alone, or two or more types may be used in combination.

The cyclic hydrocarbon group may be an alicyclic hydrocarbon group or may be an aromatic hydrocarbon group. As the plasticizer (B) has a cyclic hydrocarbon group, the compatibility with the resin component will be better, and the plasticizer (B) will be less likely to bleed out on the surface of the coating film. Therefore, blocking of the coating film will be suppressed, and it is possible to obtain a coating film excellent in coating film appearance and surface smoothness.

The melting point of the plasticizer (B) is from 60 to 200°C, preferably from 60 to 180°C, more preferably from 70 to 160°C. When the melting point is at least the lower limit value in the above range, it is possible to suppress blocking of the coating film. Further, as the plasticizer (B) is melted, a gap in the resin may be filled, whereby it will be possible to obtain a coating film excellent in coating film appearance and surface smoothness. When the melting point of the plasticizer (B) is at most the upper limit value in the above range, the melt viscosity of a molten film will be low, whereby it will be possible to obtain a coating film excellent in coating film appearance and surface smoothness.

The molecular weight of the plasticizer (B) is preferably from 200 to 1,000, more preferably from 220 to 980, particularly preferably from 240 to 960. When the molecular weight of the plasticizer (B) is at least the lower limit value in the above range, volatility will be low, the effect to lower the melt viscosity of a molten film will be sufficiently exhibited, and it will be readily possible to obtain a coating film excellent in coating film appearance and surface smoothness. When the molecular weight of the plasticizer (B) is at most the upper limit value in the above range, it is possible to suppress the plasticizing effect from being exhibited excessively, and to prevent blocking of the coating film.

The plasticizer (B) may, for example, be the following.

Dicyclohexyl phthalate (melting point: 68°C, molecular weight: 330),
hexabromocyclododecane (melting point: 180°C, molecular weight: 641),
tri-benzoic acid glyceride (melting point: 68°C, molecular weight: 404),
tetrabenzoic acid pentaerythritol (melting point: 108°C, molecular weight: 552),
1,4-cyclohexanedimethanol dibenzoate (melting point: 118°C, molecular weight: 352).

As the plasticizer (B), from such a viewpoint that it is easy to lower the melt viscosity of a molten film, and to obtain a coating film excellent in coating film appearance and surface smoothness, preferred is an ester compound (e.g. carboxylic acid ester, or phosphorous acid ester), and more preferred is a carboxylic acid ester, and from such a viewpoint that it is possible to further prevent blocking of the coating film, 1,4-cyclohexanedimethanol dibenzoate is particularly preferred.

### (Resin (C))

As the resin (C), a fluororesin having a fluorine content of less than 10 mass%, as well as a non-fluorinated resin such as an acrylic resin, a polyester resin, a polyurethane resin, an epoxy resin, or a silicone resin may be mentioned, and from the viewpoint of compatibility with the fluororesin (A), a non-fluorinated resin is preferred, an acrylic resin or a polyester resin is more preferred, and a polyester resin is particularly preferred.

The number average molecular weight of the resin (C) is preferably at most 100,000, from the viewpoint of low melt viscosity.

The mass average molecular weight of the resin (C) is preferably from 1,000 to 200,000, from the viewpoint of low melt viscosity.

### <Fluororesin having a fluorine content of less than 10 mass%>

As the fluororesin as the resin (C), it is possible to suitably select a fluororesin having a fluorine content of less than 10 mass% from among the fluororesins mentioned for the fluororesin (A).

The fluorine content of the fluororesin as the resin (C) is less than 10 mass%, preferably at most 7.5 mass%, more preferably at most 5 mass%.

### <Acrylic resin>

An acrylic resin is a polymer having (meth)acrylate units. The acrylic resin may have reactive groups such as carboxy groups, hydroxy groups, or sulfo groups. The acrylic resin having reactive groups is, when the composition for powder coating material contains a pigment such as titanium oxide pigment, excellent in dispersibility thereof.

The glass transition temperature of the acrylic resin is preferably from 30 to 60°C. When the glass transition temperature is at least the lower limit value in the above range, the coating film is less likely to undergo blocking. When the glass transition temperature of the acrylic resin is at most the upper limit value in the above range, the coating film will be further excellent in coating film appearance and surface smoothness.

The number average molecular weight of the acrylic resin is preferably from 5,000 to 100,000, particularly preferably from 10,000 to 100,000. When the number average molecular weight of the acrylic resin is at least the lower limit value in the above range, the coating film is less likely to undergo blocking. When the number average molecular weight of the acrylic resin is at most the upper limit value in the above range, the coating film will be further excellent in surface smoothness.

The mass average molecular weight of the acrylic resin is preferably from 6,000 to 150,000, more preferably from 40,000 to 150,000, particularly preferably from 60,000 to 150,000. When the mass average molecular weight of the acrylic resin is at least the lower limit value in the above range, the coating film is less likely to undergo blocking. When the mass average molecular weight of the acrylic resin is at most the upper limit value in the above range, the coating film will be further excellent in surface smoothness.

In a case where the acrylic resin has carboxy groups, the acid value of the acrylic resin is preferably from 150 to 400 mgKOH/g. When the acid value of the acrylic resin is at least the lower limit value in the above range, in a case where the composition for powder coating material contains a pigment such as titanium oxide pigment, there will be an effect to improve dispersion thereof. When the acid value of the acrylic resin is at most the upper limit value in the above range, the coating film will be excellent in moisture resistance. In a case where the acrylic resin has hydroxy groups, the hydroxy value of the acrylic resin is, from the viewpoint of adhesion to a substrate, preferably from 1 to 250 mgKOH/g.

### <Polyester resin>

The polyester resin may, for example, be one having polycarboxylic acid units and polyhydric alcohol units, and, as the case requires, units other than these two types of units (e.g. hydroxycarboxylic acid units).

The polyester resin is preferably a linear polymer or a branched polymer having a small number of branches, particularly preferably a linear polymer. In the case of a branched polymer having many branches, the softening point and the melting temperature tend to be high, and, therefore, if the polyester resin is a branched polymer, the softening point is preferably at most 200°C. As the polyester resin, preferred is a polyester resin which is solid at room temperature and which has a softening point of from 100 to 150°C.

The number average molecular weight of the polyester resin is preferably at most 5,000. The mass average molecular weight of the polyester resin is preferably from 2,000 to 20,000, particularly preferably from 2,000 to 10,000. The polyester resin is preferably one having a number average molecular weight of at most 5,000 and a mass average molecular weight of from 2,000 to 20,000, particularly preferably one having a number average molecular weight of at most 5,000 and a mass average molecular weight of from 2,000 to 10,000.

The polyester resin may have reactive groups which are reactive with a curing agent which will be described later. At least a portion of a terminal unit of the polymer chain of the polyester resin is preferably a monovalent polycarboxylic unit or a monovalent polyhydric alcohol unit, so that in the former case, a free carboxy group of the unit, or in the latter case, a free hydroxy group of the unit, will function as a reactive group. A unit having a reactive group may be a unit other than a terminal unit. For example, a divalent polyhydric alcohol unit derived from a polyhydric alcohol having at least 3 hydroxy groups, is a unit having a free hydroxy group, and therefore, the polyester resin may have a divalent or higher valent unit having such a reactive group.

The reactive groups in the polyester resin are preferably hydroxy groups, from such a viewpoint that the coating film will thereby be excellent in water resistance, alkali resistance and acid resistance. The polyester resin usually has hydroxy groups and carboxy groups, and as the polyester resin, preferred is a polyester resin which mainly has hydroxy groups.

The hydroxy value of the polyester resin is preferably from 20 to 100 mgKOH/g, particularly preferably from 20 to 80 mgKOH/g. The acid value of the polyester resin is preferably from 1 to 80 mgKOH/g, particularly preferably from 3 to 50 mgKOH/g. The hydroxy value and acid value of the polyester resin are values measured in accordance with JIS K 0070: 1992.

As the polyester resin, from such a viewpoint that it is possible to lower the melt viscosity of a molten film, preferred is a polyester resin having C₈₋₁₅ aromatic polycarboxylic acid units and C₂₋₁₀ polyhydric alcohol units.

### (Curing agent)

The curing agent is, in a case where at least one of the fluororesin (A) and the resin (C) has reactive groups (e.g. hydroxy groups, or carboxy groups), a compound which reacts with such reactive groups to cure the fluororesin (A) and/or the resin (C) by cross-linking or increasing the molecular weight thereof. The curing agent has at least two reactive groups capable of reacting to the reactive groups of the fluororesin (A) and the resin (C). As the reactive groups of the curing agent, those reactive with the reactive groups of the fluororesin (A) and the resin (C) at room temperature are not desirable, and therefore, reactive groups are preferred which are capable of reacting at the time when a powder coating material containing a powder composed of the composition for powder coating material is heated and melted. For example, blocked isocyanate groups are preferred rather than isocyanate groups having high reactive groups at room temperature. At the time when the powder coating material is heated and melted, blocked isocyanate groups become isocyanate groups as a blocking agent is eliminated, and the isocyanate groups will act as reactive groups.

As the curing agent, it is possible to use a known compound, and, for example, a blocked isocyanate-type curing agent, an amine-type curing agent (e.g. a melamine resin, guanamine resin, sulfonamide resin, urea resin, aniline resin with amino groups having hydroxymethyl groups or alkoxymethyl groups bonded thereto), a β-hydroxyalkylamide-type curing agent, or an epoxy-type curing agent (e.g. triglycidyl isocyanurate) may be mentioned. From the viewpoint of excellency in adhesion to the substrate, processability of a product after coating, and water resistance of the coating film, a blocked isocyanate-type curing agent is particularly preferred.

In the case of the fluorinated polymer (A2), as the curing agent, a β-hydroxyalkylamide-type curing agent or an epoxy-type curing agent is preferred.

As the curing agent, one type may be used alone, or two or more types may be used in combination.

As the blocked isocyanate-type curing agent, preferred is one which is solid at room temperature.

As the blocked isocyanate-type curing agent, preferred is one produced by reacting an aliphatic, aromatic or araliphatic diisocyanate with a low molecular compound having active hydrogen, to obtain a polyisocyanate, which is reacted with a blocking agent for masking.

### (Curing catalyst)

The curing catalyst is one to promote a curing reaction to impart good chemical performance and physical performance to the coating film.

In a case where a blocked isocyanate-type curing agent is used, as the curing catalyst, preferred is a tin catalyst (e.g. tin octylate, tributyltin laurate, or dibutyltin dilaurate).

As the curing catalyst, one type may be used alone, or two or more types may be used in combination.

### (Other components)

The composition (1) may contain, as other components, one or more of various additives such as UV absorbers, pigments, light stabilizers, matting agents, surfactants, leveling agents, surface modifiers, degassing agents, fillers, heat stabilizers, thickeners, dispersing agents, antistatic agents, rust inhibitors, silane coupling agents, antifouling agents, or low pollution treatment agents.

As the ultraviolet absorber, any of organic ultraviolet absorbers and inorganic ultraviolet absorbers may be used.

As the ultraviolet absorber, one type may be used alone, or two or more types may be used in combination.

The pigment is preferably a pigment selected from the group consisting of luster pigments, anticorrosive pigments, color pigments and extender pigments.

As the pigment, one type may be used alone, or two or more types may be used in combination.

A luster pigment is a pigment having high light reflectivity consisting of flaky particles, and may, for example, be flaky metal particles, mica particles, or pearl particles. The surface of the flaky particles may be coated with a coating material. The flaky metal particles may, for example, be flaky aluminum particles, flaky nickel particles, flaky stainless steel particulate, flaky copper particles, flaky bronze particles, flaky gold particles, or flaky silver particles.

The luster pigment is preferably flaky aluminum particles, mica particles or pearl particles, particularly preferably flaky aluminum particles.

The specific gravity of the flaky particles is preferably from 0.1 to 4.0 g/cm³, more preferably from 0.3 to 2.0 g/cm³.

### (Content of each component of the composition (1))

In a case where the composition (1) contains the resin (C), the mass ratio of the fluororesin (A) to the resin (C) ((A)/(C)) is preferably from 90/10 to 10/90, more preferably from 80/20 to 20/80, particularly preferably from 40/60 to 20/80. When (A)/(C) is within the above range, the weather resistance of the coating film will be excellent, and it is possible to reduce the cost of the coating film.

The content of the plasticizer (B) is from 0.1 to 40 parts by mass to 100 parts by mass of the resin component contained in the composition (1).

In a case where the resin component is the fluororesin (A), the content of the plasticizer (B) is preferably from 1.0 to 35 parts by mass, more preferably from 1.5 to 30 parts by mass.

In a case where the resin component is the fluororesin (A) and the resin (C), the content of the plasticizer (B) is preferably from 0.5 to 35 parts by mass, more preferably from 1.0 to 30 parts by mass.

When the content of the plasticizer (B) is within the above range, it is possible to form a coating film excellent in surface smoothness and having no defect such as cissing on the coating film appearance. When the content of the plasticizer (B) is at least the lower limit value in the above range, the effect of reducing the melt viscosity of a molten film will be sufficiently exhibited, and it is possible to obtain a coating film excellent in coating film appearance and surface smoothness. When the content of the plasticizer (B) is at most the upper limit value in the above range, blocking of the coating film will be suppressed.

In a case where the composition (1) contains a curing agent, the content of the curing agent in the composition (1) is preferably from 1 to 55 parts by mass, particularly preferably from 3 to 55 parts by mass, to 100 parts by mass of the resin component contained in the composition (1).

In a case where the curing agent is a blocked isocyanate-type curing agent, the content of the blocked isocyanate-type curing agent in the composition (1) is preferably such an amount that the molar ratio of isocyanate groups to hydroxy groups in the composition (1) will be from 0.05 to 1.5, particularly preferably from 0.8 to 1.2. When the molar ratio is at least the lower limit value in the above range, the degree of curing of the coating film will be high, and the coating film will be excellent in hardness, and chemical resistance. When the molar ratio is at most the upper limit value in the above range, the coating film will be less likely to become brittle, and moreover, the coating film will be excellent in heat resistance, chemical resistance, and moisture resistance.

In a case where the composition (1) contains a curing catalyst, the content of the curing catalyst in the composition (1) is preferably from 0.0001 to 10.0 parts by mass to 100 parts by mass of the resin component contained in the composition (1). When the content of the curing catalyst is at least the lower limit value in the above range, the catalytic effect will be easily sufficiently obtainable. When the content of the curing catalyst is at most the upper limit value in the above range, gas such as air included in the powder coating material during the melting and curing process of the powder coating material, tends to be readily removed, whereby reduction of heat resistance, weather resistance and water resistance of the coating film to be caused by remaining gas, will be less.

In a case where the composition (1) contains a pigment, the content of the pigment in the composition (1) is preferably from 20 to 200 parts by mass, particularly preferably from 50 to 150 parts by mass, to 100 parts by mass of the resin component contained in the composition (1).

In a case where the composition (1) contains other components except the pigment, the content of other components except the pigment in the composition (1) is preferably at most 45 mass%, more preferably at most 30 mass%, in the composition (1) (100 mass%).

### (Advantageous effects)

As described above, the composition (1) contains the fluororesin (A), whereby it is possible to obtain a powder coating material capable of forming a coating film excellent in weather resistance.

Further, the composition (1) contains the plasticizer (B) in a specific content, whereby it is possible to obtain a powder coating material capable of forming a coating film excellent in coating film appearance and surface smoothness, for the following reasons.

That is, when the powder coating material is applied to a substrate to form a molten film composed of a melt of the powder coating material, the molten resin component and the molten plasticizer (B) are mixed, whereby lowering the melt viscosity of the resin component is accelerated by the plasticizing effects of the plasticizer (B). Thus, it is considered that fusion among the resins to one another advances to form a coating film excellent in coating film appearance and surface smoothness. Further, since the amount of the plasticizer (B) is proper, effects on the physical properties (e.g. blocking resistance) of the coating film are also considered to be suppressed.

### [Powder coating materials]

Powder coating material (I): comprising a powder (hereinafter also referred to as "powder (X1)") composed of the composition for powder coating material (the aforementioned composition (1)) of the present invention.

Each component or each optional component to be used in the powder coating material (I) may be the same as each component described in the foregoing description of the composition for powder coating material.

Now, each of the powder coating material (I) will be described.

### [Powder coating material (I)]

The powder coating material (I) comprises at least one type of powder (X1) composed of the composition (1).

The content of the powder (X1) in the powder coating material (I) is preferably from 50 to 100 mass%, more preferably from 70 to 100 mass%, further preferably from 80 to 100 mass%, particularly preferably from 90 to 100 mass%. The powder coating material (I) may be a coating material consisting solely of the powder (X1).

### (Production method for powder coating material (I))

The powder coating material (I) can be produced, for example, by a production method having the following step (a), step (b) and step (c).
(a) A step of melt-kneading a mixture which comprises a fluororesin (A) and a plasticizer (B) and which may, as the case requires, contain a resin (C), a pigment, a curing agent, a curing catalyst and other components, to obtain a kneaded product composed of the composition (1).
(b) A step of grinding the kneaded product composed of the composition (1) to obtain a powder (X1).
(c) As a case requires, a step of conducting classification of the powder (X1).

### <Step (a)>

The respective components are mixed to prepare a mixture, and then, the mixture is melt-kneaded to obtain a kneaded product having the respective components homogenized.

Each component is preferably preliminarily pulverized into a powder form.

The apparatus to be used for mixing may, for example, be a high speed mixer, a V type mixer, or an inverted mixer.

The apparatus to be used for melt-kneading may, for example, be an uniaxial extruder, a biaxial extruder, or a planetary gear.

The kneaded product is preferably pelletized after cooling.

### <Step (b)>

The apparatus to be used for grinding may, for example, be a pulverizer such as a pin mill, a hammer mill, or a jet mill.

### <Step (c)>

In order to remove powder particles with too large or too small particle sizes, it is preferred to carry out classification after pulverization. When performing classification, it is preferred to remove at least either the particles with a particle size of less than 10 µm or particles with a particle size exceeding 100 µm.

The classification method may, for example, be a method by sieving, or an air classification method.

Further, a powder composition comprising a powder of the fluororesin (A) and a powder of the plasticizer (B), or a powder composition further containing a powder of the resin (C), may be made to be the powder coating material (I). For example, it is possible to produce a powder coating material (I) by dry-blending a powder of the fluororesin (A) and a powder of the plasticizer (B). The average particle size of each powder is preferably preliminarily adjusted by classification, or classification can be conducted after the dry blending. The powder of the fluororesin (A), the powder of the plasticizer (B), or the powder of the resin (C), may be a powder of a composition having a pigment, a curing agent, or a curing catalyst preliminarily incorporated. For example, it is possible to pulverize a molten mixture comprising the fluororesin (A) and a pigment, a curing agent, or a curing catalyst and use it as a powder of the fluororesin (A). Further, among a pigment, a curing agent, and a curing catalyst, one capable of being used as a powder having the average particle size properly adjusted, may be, in its powder form, dry-blended together with a powder of the fluororesin (A) and a powder of the plasticizer (B) to produce a powder coating material (I).

The average particle size of the powder (X1) is, for example, preferably from 25 to 50 µm in a 50% average volume particle size distribution. Measurement of the particle size of the powder is usually carried out by using a particle size measuring instrument of a format to capture the potential change at the time of passing through a pore, a laser diffraction method, an image determination format, or a sedimentation rate measurement method.

### (Advantageous effects)

The powder coating material (I) as described above contains the fluororesin (A), whereby it is possible to form a coating film excellent in weather resistance.

Further, the powder coating material (I) contains a plasticizer (B) in a specific content, whereby, from the above-mentioned reasons, it is possible to form a coating film excellent in coating film appearance and surface smoothness.

The powder coating material of the present invention is preferably a powder coating material containing the above-mentioned luster pigment. As described above, the luster pigment may be incorporated to the composition (1) to obtain a powder coating material (I) containing the luster pigment. Otherwise, without incorporating the luster pigment to the composition (1), a powder coating material containing the luster pigment may be prepared. For example, after producing a powder of the composition (1) containing no luster pigment, such a powder and the luster pigment powder may be mixed to obtain a powder coating material containing the luster pigment. When mixing the powder of the composition (1) and the luster pigment powder, particles of the luster pigment powder may be attached to the surface of the powder particles of the composition (1) by heating to such a level that the powder particles are not melted. By attaching particles of the luster pigment powder to the surface of powder particles of the composition (1), it is possible to reduce uneven distribution of particles of the powder coating material and particles of the luster pigment powder, thereby to form a uniform coating film.

In the powder coating material (I) obtained by blending the luster pigment in the powder of the composition (1), the composition (1) may contain a pigment other than the luster pigment or may contain a part of the luster pigment.

The content of the luster pigment in the powder coating material is preferably within the above-mentioned preferred proportion of the pigment to the resin component.

### [Coated article]

The coated article of the present invention has, on the surface of a substrate, a coating film formed from the powder coating material (I) (hereinafter the powder coating material (I) may be also referred to collectively as a "powder coating material").

In order to increase adhesion between the substrate and the coating film, the coated article may have a primer layer comprising a primer between the coating film and the substrate.

As the primer, it is possible to suitably use at least one type of resin selected from the group consisting of an acrylic resin, a polyester resin and an epoxy resin.

The thickness of the primer layer is preferably from 0.1 to 60 µm, more preferably from 1 to 40 µm.

### (Substrate)

The material of the substrate may, for example, be a metal such as aluminum, iron, zinc, tin, titanium, lead, special steel, stainless steel, copper, magnesium, or brass. The material of the substrate may be suitably selected depending on e.g. the application of the coated article. The substrate may, for example, be an alloy containing two or more types of metal among the above exemplified metals. As the material of the substrate, from the viewpoint of being light in weight and excellent in corrosion resistance and strength, preferred is aluminum or its alloy.

The aluminum alloy may, for example, be an alloy of aluminum with at least one member selected from the group consisting of copper, manganese, silicon, magnesium, zinc and nickel.

The shape and size of the substrate are not particularly limited.

Aluminum or an aluminum alloy may be one subjected to an anodic oxide coating treatment, or to surface treatment with a chemical conversion treatment agent.

The chemical conversion treatment agent may, for example, be a hexavalent chromium-type treatment agent, a trivalent chromium-type treatment agent, a zirconium-type treatment agent, or a titanium-type treatment agent. From the viewpoint of environmental consideration, a zirconium-type treatment agent or a titanium-type treatment agent is preferred.

Specifically, the zirconium-type treatment agent may, for example, be "Chemibonder 5507, 5703, 5705, 5706" (trade name), manufactured by The Japan Cee-Bee Chemical Co., Ltd., "Palcoat 3762, 3796, 20X" (trade name), manufactured by Nihon Parkerizing Co., Ltd., "Alodine 5200, 4707" (trade name), manufactured by Henkel, "Alsurf 320, 375" (trade name), manufactured by Nippon Paint Co., Ltd., "E-CLPS 1700, 1900" (trade name), manufactured by Bulk Chemicals, or "Inter Rocks 5705, 5707" (trade name), manufactured by Atotech Co., Ltd., and the titanium-type treatment agent may, for example, be "Alsurf CX4707" (trade name), manufactured by Nippon Paint Co., Ltd., or "E-CLPS 2100, 2900" (trade name), manufactured by Bulk Chemicals.

### (Coating film)

The thickness of the coating film is preferably from 20 to 1,000 µm, more preferably from 20 to 500 µm, particularly preferably from 20 to 300 µm. The thickness of the coating film may be suitably set depending e.g. on the weather resistance required for the coated article.

The 60 degree specular gloss of the coating film is preferably from 10 to 90%, more preferably from 20 to 90%, particularly preferably from 30 to 90%. When the 60 degree specular gloss of the coating film is at least the lower limit value in the above range, the coating film appearance will not be dull. When the 60 degree specular gloss of the coating film is at most the upper limit value in the above range, toning reproducibility of the coating film will be easily obtainable. The 60 degree specular gloss of the coating film may be adjusted by addition of an inorganic pigment.

### (Production method for coated article)

The coated article of the present invention can be produced by the production method comprising the following step (e) and step (f).
(e) A step of applying the powder coating material on a substrate to form a molten film composed of a melt of the powder coating material.
(f) A step of solidifying the molten film and, as the case requires, curing it, to form a coating film.

### <Step (e)>

The molten film may be formed at the same time as the application of the powder coating material to the substrate, or may be formed, after letting a powder of the powder coating material be attached on the substrate, by heating and melting the powder on the substrate.

In a case where the powder coating material has reactivity, substantially at the same time as the powder coating material is heated and melted, the curing reaction of the reactive groups in the composition will be initiated, and accordingly, it is necessary to carry out heat-melting of the powder coating material and adhesion to the substrate substantially at the same time, or it is necessary to carry out the heat-melting of the powder coating material after attachment of the powder coating material to the substrate.

The heating temperature (hereinafter also referred to as "baking temperature") and the heating maintaining time (hereinafter also referred to as "baking time") to heat and melt the powder coating material and to maintain the molten state for a predetermined time, are suitably set depending upon e.g. the types and compositions of the raw material components of the powder coating material, or the thickness of the desired coating film. Especially, the baking temperature is preferably set depending on the reaction temperature of the curing agent. For example, in the case of using a blocked polyisocyanate-type curing agent as the curing agent, the baking temperature is preferably from 170 to 210°C. The baking time is preferably from 5 to 120 minutes, particularly preferably from 10 to 60 minutes.

The coating method may, for example, be an electrostatic coating method, an electrostatic spraying method, an electrostatic dipping method, a misting method, a flow immersion method, a blowing method, a spraying method, a thermal spraying method, or a plasma spraying method. From such a viewpoint that even when the coating film is thinned, the coating film will be excellent in surface smoothness, and further, the coating film is excellent in concealing property, preferred is an electrostatic coating method using a powder coating gun.

### <Step (f)>

The molten film is cooled to room temperature (20 to 25°C) and solidified to form a coating film.

The cooling may be either quenching or annealing.

### (Applications)

Applications of the coated article of the present invention may, for example, be a building exterior member (e.g. an aluminum composite panel, an aluminum curtain wall panel, an aluminum frame for curtain wall, or an aluminum window frame), an oil storage tank, a natural gas tank, a ceramic building material, a housing exterior material, an automobile part, an aircraft member, a railway vehicle member, a solar cell BS member, a wind power tower, or a wind power blade.

The coated article of the present invention has a coating film excellent in coating film appearance and surface smoothness, and therefore, it is also suitable for an application with a wide coated area, such as a building material panel.

### (Advantageous effects)

In the coated article of the present invention as described above, the coating film contains the fluororesin (A) or a reaction product of the fluorocarbon resin (A) with the curing agent, whereby the coating film is excellent in weather resistance.

Further, in the coated article of the present invention, the coating film is formed by using a powder coating material containing the plasticizer (B) in a specific content, whereby, from the above-mentioned reasons, the coating film is excellent in coating film appearance and surface smoothness.

### EXAMPLES

Now, the present invention will be described in detail with reference to Examples, but the present invention is not limited to these Examples.

Ex. 1 to 11, and Ex. 21 to 23 are Examples of the present invention, and Ex. 12 to 16, Ex. 20, and Ex. 24 are Comparative Examples, whereas Ex. 17 to 19 are Reference Examples.

### [Measurement methods, and evaluation methods]

### (Copolymerization composition of fluororesin (A))

The copolymerization composition of a fluororesin (A) was obtained by the melt NMR analysis, the fluorine content analysis and the infrared absorption spectrum analysis.

### (Number average molecular weight (Mn))

The number average molecular weight (Mn) calculated as polystyrene was obtained by using a high-speed GPC apparatus (manufactured by Tosoh Corporation, column TSKgelG 400XL).

### (Melting point)

Using a differential scanning calorimeter (Themal Analysis System, manufactured by Perkin Elmer), the temperature at the melting peak at the time when a sample was heated at a rate of 10°C/min. was obtained and adopted as the melting point.

### (Softening point)

Using an automatic softening point apparatus (ASP-M4SP, manufactured by Meiho Co.), the softening point of a sample was obtained by the ring and ball method in accordance with JIS K 2207.

### (Average particle diameter)

As the average particle diameter of a powder, the average particle diameter at the 50% average volume particle size distribution was measured by using a laser diffraction type particle size distribution analyzer (Helos-Rodos, manufactured by Sympatec Inc.).

### (Coating film appearance)

The state of the surface of the coating film was visually observed and judged by the following standards.
○ (good): On the coating film, a defect such as seeding, cissing or wettability was not observed.
× (bad): On the coating film, a defect such as seeding, cissing or wettability was observed.

### (Surface smoothness of coating film)

Judged by using standard plates for visual determination of smoothness of a coating film by PCI (Powder Coating Institute). The standard plates are 10 types of from 1 to 10, and the larger the number, the better the smoothness.
○ (good): PCI value is 8 or more.
Δ (usual): PCI value is from 6 to 7.
× (bad): PCI value is 5 or less.

### (Blocking resistance of coating film)

An urethane resin sheet was placed on a coating film of a test specimen, and a weight was put thereon so that the pressure of 0.20 MPa was exerted. After being left to stand still for 16 hours in an atmosphere of 40°C, the weight and the sheet were removed. The state of a trace of the sheet remaining on the coating film of the test specimen was visually evaluated by from 1 to 5 grades. Grade 5 represents a state where no trace was observed, and grade 1 represents a state where the trace was distinctly observed.
○ (good): Evaluation is 4 or more.
Δ (usual): Evaluation is 3.
× (bad): Evaluation is 2 or less.

### (60 degree specular gloss)

Using a specular gloss meter (PG-1M, manufactured by Nippon Denshoku Industries Co., Ltd.), the specular gloss of the surface of a coating film was measured at an incidence and reflection angle of 60°.
○ (good): The specular gloss is from 10% to 90%.
× (bad): The specular gloss is less than 10% or more than 90%.

### (Accelerated weather resistance (gloss retention))

With respect to a test specimen, by using an accelerated weathering tester in accordance with JIS B 7753: 2007 (sunshine weatherometer system), an accelerated weathering test was conducted by setting the test time to be 3,000 hours. By taking the 60° specular gloss of a coating film before the test as 100%, the retention (gloss retention) (%) of the 60° specular gloss of the coating film after the test, was obtained. The 60° specular gloss was measured by a gloss meter (micro-TRI-gross, manufactured by BYK Co., incident reflection angle: 60°).
○ (good): The gloss retention is 80% or more.
× (bad): The gloss retention is less than 80%.

### [Each component]

### (Fluororesin (A))

### <Fluorinated polymer (A-1)>

Into a stainless steel autoclave equipped with a stirrer having an inner volume of 250 mL, 51.2 g of cyclohexyl vinyl ether (CHVE), 13.3 g of 4-hydroxybutyl vinyl ether (HBVE), 55.8 g of xylene, 15.7 g of ethanol, 1.1 g of potassium carbonate, 0.7 g of a 50 mass% xylene solution of tert-butyl peroxypivalate and 63.0 g of CTFE were introduced. The temperature was gradually raised, and after reaching 55°C, it was held for 20 hours. It was raised to 65°C and kept for 5 hours. After cooling, filtration was conducted to remove a residue and to obtain a xylene solution of the fluorinated polymer (A-1). The obtained xylene solution of the fluorinated polymer (A-1) was evaporated by a thin-film evaporator, and dried until the solid content concentration became at least 99.5 mass%. The fluorinated polymer (A-1) thus obtained, was a fluorinated polymer (A) having hydroxy groups, and the glass transition point (Tg) by a differential calorimetry (DSC) was 54°C, and the number average molecular weight (Mn) by chromatograph (GPC) was 12,000. Further, by an NMR analysis, the copolymerization composition was confirmed and found to be CTFE units/CHVE units/HBVE units = 50/35/15 (molar ratio), and the fluorine atom content was 23 mass%.

### <Fluorinated polymer (A-2)>

Into a stainless steel autoclave equipped with a stirrer having an inner volume of 250 mL, 10.4 g of tert-butyl vinyl ether (t-BuVE), 13.2 g of HBVE, 38.5 g of vinyl pivalate (VPV), 55.0 g of xylene, 15.7 g of ethanol, 1.1 g of potassium carbonate, 0.7 g of a 50 mass% xylene solution of tert-butyl peroxypivalate and 63.0 g of CTFE, were introduced. The temperature was gradually raised, and after reaching 55°C, it was held for 20 hours. Then, it was raised to 65°C and kept for 5 hours. After cooling, filtration was conducted to remove a residue and to obtain a xylene solution of the fluorinated polymer (A-2). The obtained xylene solution of the fluorinated polymer (A-2) was evaporated by a thin-film evaporator, and dried until the solid content concentration became at least 99.5 mass%. The fluorinated polymer (A-2) thus obtained, was a fluorinated polymer (A) having hydroxy groups, and the glass transition point (Tg) by a differential calorimetry (DSC) was 54°C, and the number average molecular weight (Mn) by chromatograph (GPC) was 12,000. Further, by an NMR analysis, the copolymerization composition was confirmed and found to be CTFE units/t-BuVE units/HBVE units/VPV units = 50/11/4/35 (molar ratio), and the fluorine atom content was 25 mass %.

### <PVDF (A-3)>

As PVDF (A-3), a commercially available PVDF (PVDF DS203, manufactured by SHENZHOU NEWMATERIAL CO, LTD., number-average molecular weight: 160,000, fluorine content: 33 mass%) was obtained and used.

### (Plasticizer)

Among the following plasticizers, plasticizers (1) and (2) are plasticizers (B), and plasticizers (3) to (5) are plasticizers other than the plasticizer (B).

Plasticizer (1): 1,4-cyclohexane dimethanol dibenzoate (Benzoflex 352 (trade name), manufactured by VELSICOL Corp., melting point: 118°C, molecular weight: 352).

Plasticizer (2): dicyclohexyl phthalate (manufactured by Wako Pure Chemical Industries, Ltd., melting point: 68°C, molecular weight: 330).

Plasticizer (3): triphenyl phosphate (JP-360, manufactured by Johoku Chemical Co., Ltd., melting point: 50°C, molecular weight: 326).

Plasticizer (4): dimethyl phthalate (DMP, manufactured by Daihachi Chemical Industry Co., Ltd. melting point: 2°C, molecular weight: 194).

Plasticizer (5): 3,9-bis(2,6-di-tert-butyl-4-methylphenoxy)-2,4,8,10-tetraoxa-3,9-diphosphaspiro[5.5]undecane (PEP-36, manufactured by ADEKA Corporation, melting point: 234°C, molecular weight: 633).

### (Resin (C))

Resin (C-1): polyester resin (CRYLCOAT 4890-0 (trade name), manufactured by DAICEL-ALLNEX LTD., number-average molecular weight (Mn): 2,500, softening point: 120°C).

Resin (C-2): polyester resin (U-PICA COAT GV130, manufactured by Japan U-pica Company Ltd., number average molecular weight (Mn): 4,900, softening point: 115°C).

Resin (C-3): acrylic resin (ARUFON UH-2170 (trade name), manufactured by Toagosei Co., Ltd., number-average molecular weight (Mn): 15,500).

Resin (C-4): epoxy resin (EPOTOHTO YDCN704 (trade name), manufactured by NIPPON STEEL & SUMIKIN CHEMICAL CO., LTD., number-average molecular weight (Mn): 1,300).

### (Curing agent)

Curing agent (1): a blocked isocyanate-type curing agent (VESTAGON B1530 (trade name), manufactured by Evonik).

### (Curing catalyst)

Curing catalyst (1): xylene solution of dibutyltin dilaurate (10,000 fold diluted product).

### (Other components)

Pigment: titanium oxide (Ti-Pure R960 (trade name), manufactured by Dupont, titanium oxide content: 89 mass%).

Degassing agent: benzoin.

Surface modifier A: BYK-360P (trade name), manufactured by BYK-Chemie GmbH.

Surface modifier B: CERAFLOUR 960 (trade name), manufactured by BYK-Chemie GmbH, micronized modified amide wax, melting point: 145°C.

### [Ex. 1 to 16]

The respective components identified in Table 1 and Table 2 were mixed for from about 10 to 30 minutes, by using a high speed mixer (manufactured by Yusaki Co., Ltd.), to obtain a powdery mixture. Using a biaxial extruder (16 mm extruder, manufactured by Thermo Prism Ltd.), the mixture was melt-kneaded at a barrel set temperature of 120°C, to obtain pellets made of the powder coating material composition. Using a grinder (product name: rotor speed mill P14, manufactured by FRITSCH), the pellets were ground at room temperature, and classified by a 150 mesh sieve, to obtain a powder having an average particle size of about 40 µm. The amounts of the respective components identified in Table 1 and Table 2 are net weights.

Using the obtained powder as the powder coating material (I), electrostatic coating was applied on one surface of an aluminum plate (substrate) subjected to chromate treatment, by using an electrostatic coating machine (GX3600C, manufactured by Onoda Cement Co., Ltd.), and the coated product was held in a 200°C atmosphere for 20 minutes. It was left to cool to room temperature to obtain an aluminum plate provided with a coating film with a thickness of from 55 to 65 µm. The obtained coating film-attached aluminum plate was evaluated as a test specimen. The results are shown in Table 1 and Table 2.

**[Table 1]**

| Ex. | | | 1 | 2 | 3 | 4 | 5 | 6 | 7 | 8 |
|---|---|---|---|---|---|---|---|---|---|---|
| Blend (parts by mass) | Fluororesin (A) | (A-1) | 58 | 55 | 55 | 50.5 | 47 | - | 27.5 | 27.5 |
| | | (A-2) | - | - | - | - | - | 55 | - | - |
| | | (A-3) | - | - | - | - | - | - | - | - |
| | Plasticizer | (1) | 0.63 | 5 | - | 12.5 | 18.6 | 5 | 5 | 5 |
| | | (2) | - | - | 5 | - | - | - | - | - |
| | | (3) | - | - | - | - | - | - | - | - |
| | | (4) | - | - | - | - | - | - | - | - |
| | | (5) | - | - | - | - | - | - | - | - |
| | Resin (C) | (C-1) | - | - | - | - | - | - | 27.5 | - |
| | | (C-2) | - | - | - | - | - | - | - | 27.5 |
| | | (C-3) | - | - | - | - | - | - | - | - |
| | | (C-4) | - | - | - | - | - | - | - | - |
| | Curing agent | (1) | 18.9 | 18 | 18 | 16.5 | 15 | 18 | 18 | 18 |
| | Curing catalyst | (1) | 0.0068 | 0.0068 | 0.0068 | 0.0068 | 0.0068 | 0.0068 | 0.0068 | 0.0068 |
| | Other components | Pigment | 18.8 | 18.4 | 18.4 | 16.9 | 16.2 | 18.4 | 18.4 | 18.4 |
| | | Degassing agent | 0.46 | 0.45 | 0.45 | 0.43 | 0.43 | 0.45 | 0.45 | 0.45 |
| | | Surface modifier A | 1.1 | 1.1 | 1.1 | 1.1 | 1 | 1.1 | 1.1 | 1.1 |
| | | Surface modifier B | 2.1 | 2.1 | 2.1 | 2.1 | 1.8 | 2.1 | 2.1 | 2.1 |
| Plasticizer | | Melting point [°C] | 118 | 118 | 68 | 118 | 118 | 118 | 118 | 118 |
| | | Content of plasticizer to 100 parts by mass of (A)+(C) [parts by mass] | 1 | 9 | 9 | 25 | 40 | 9 | 9 | 9 |
| Evaluation results | Coating film appearance | | ○ | ○ | ○ | ○ | ○ | ○ | ○ | ○ |
| | Surface smoothness | | Δ | ○ | ○ | ○ | ○ | ○ | ○ | ○ |
| | PCI | | 7 | 8 | 8 | 9 | 9 | 9 | 9 | 9 |
| | Blocking resistance | | ○ | ○ | ○ | ○ | Δ | ○ | ○ | ○ |
| | | | 5 | 5 | 5 | 4 | 3 | 5 | 5 | 5 |
| | 60 degree specular gloss | | ○ | ○ | ○ | ○ | ○ | ○ | ○ | ○ |
| | 60 degree specular gloss [%] | | 80 | 74 | 72 | 78 | 76 | 80 | 82 | 77 |
| | Accelerated weather resistance | | ○ | ○ | ○ | ○ | ○ | ○ | ○ | ○ |
| | Gloss retention [%] | | 82 | 88 | 82 | 81 | 83 | 83 | 81 | 82 |

**[Table 2]**

| Ex. | | | 9 | 10 | 11 | 12 | 13 | 14 | 15 | 16 |
|---|---|---|---|---|---|---|---|---|---|---|
| Blend (parts by mass) | Fluororesin (A) | (A-1) | 27.5 | 27.5 | - | 58.2 | 55 | 55 | 48.3 | 55 |
| | | (A-2) | - | - | - | - | - | - | - | - |
| | | (A-3) | - | - | 72 | - | - | - | - | - |
| | Plasticizer | (1) | 5 | 5 | 7.2 | - | - | - | 19.7 | - |
| | | (2) | - | - | - | - | - | - | - | - |
| | | (3) | - | - | - | - | 5 | - | - | - |
| | | (4) | - | - | - | - | - | 5 | - | - |
| | | (5) | - | - | - | - | - | - | - | 5 |
| | Resin (C) | (C-1) | - | - | - | - | - | - | - | - |
| | | (C-2) | - | - | - | - | - | - | - | - |
| | | (C-3) | 27.5 | - | - | - | - | - | - | - |
| | | (C-4) | - | 27.5 | - | - | - | - | - | - |
| | Curing agent | (1) | 18 | 18 | - | 18.7 | 18 | 18 | 13.8 | 13.8 |
| | Curing catalyst | (1) | 0.0068 | 0.0068 | - | 0.0068 | 0.0068 | 0.0068 | 0.0068 | 0.0068 |
| | Other components | Pigment | 18.4 | 18.4 | 17.2 | 19.8 | 18.4 | 18.4 | 14.9 | 14.9 |
| | | Degassing agent | 0.45 | 0.45 | 0.45 | 0.45 | 0.45 | 0.45 | 0.43 | 0.43 |
| | | Surface modifier A | 1.1 | 1.1 | 1.1 | 1.1 | 1.1 | 1.1 | 1 | 1 |
| | | Surface modifier B | 2.1 | 2.1 | 2.1 | 2.1 | 2.1 | 2.1 | 1.9 | 1.9 |
| Plasticizer | | Melting point [°C] | 118 | 118 | 118 | - | 50 | 2 | 118 | 234 |
| | | Content of plasticizer to 100 parts by mass of (A)+(C) [parts by mass] | 9 | 9 | 9 | 0 | 9 | 9 | 41 | 9 |
| Evaluation results | Coating film appearance | | ○ | ○ | ○ | × | Δ | ○ | ○ | x |
| | Surface smoothness | | ○ | ○ | ○ | × | × | × | ○ | × |
| | PCI | | 9 | 9 | 9 | 3 | 5 | 3 | 9 | 3 |
| | Blocking resistance | | ○ | ○ | ○ | ○ | ○ | ○ | × | ○ |
| | | | 5 | 5 | 5 | 5 | 5 | 5 | 2 | 5 |
| | 60 degree specular gloss | | ○ | ○ | ○ | ○ | × | ○ | ○ | ○ |
| | 60 degree specular gloss [%] | | 82 | 78 | 81 | 74 | 8 | 77 | 82 | 77 |
| | Accelerated weather resistance | | ○ | ○ | ○ | ○ | ○ | ○ | × | ○ |
| | Gloss retention [%] | | 82 | 82 | 80 | 81 | 88 | 82 | 77 | 80 |

According to the powder coating materials in Ex. 1 to 11 having the plasticizer (B) incorporated in a range of from 0.1 to 40 parts by mass to 100 parts by mass of the resin component, it was possible to form a coating film excellent in coating film appearance without a defect such as cissing or wettability and also excellent in surface smoothness.

On the other hand, the coating film formed by the powder coating material composed of a composition for powder coating material in Ex. 12 containing no plasticizer (B), was poor in coating film appearance and surface smoothness.

The coating films formed by powder coating materials composed of compositions for powder coating material in Ex. 13 and 14 containing a plasticizer with a melting point of less than 60°C, were inferior in surface smoothness. Further, since irregularities of the surface of the coating films were large, stickiness was observed on the surface of the coating films, although the results of blocking resistance were good.

The coating film formed from the powder coating material composed of the composition for powder coating material in Ex. 15 containing a plasticizer (B) in excess was inferior in surface appearance with a large amount of dust attached, and also inferior in blocking resistance.

The coating film formed by a powder coating material composed of the composition for powder coating material in Ex. 16 containing a plasticizer having a melting point exceeding 200°C, was inferior in surface appearance.

### [Ex. 17 to 20]

Using the respective components identified in Table 3, in the same manner as in Ex. 1, powders having an average particle diameter of about 40 µm (powders (X-1) to (X-2) and powders (Y-1) to (Y-2)) were obtained.

The respective powder materials shown in Table 4 were, each in an amount of 500 g, dry-blended by using a high speed mixer (capacity 2 L, manufactured by Earth Technica Co., Ltd.) under the conditions of 500 rpm of the agitator blades and 4,000 rpm of the chopper blades, at room temperature for 1 minute, to prepare a powder coating material (II).

Using the obtained powder coating material (II), electrostatic coating was applied on one surface of an aluminum plate subjected to chromate treatment, by using an electrostatic coating machine (GX3600C, manufactured by Onoda Cement Co., Ltd.), and the coated product was held in a 200°C atmosphere for 20 minutes. It was left to cool to room temperature to obtain an aluminum plate provided with a coating film with a thickness of from 55 to 65 µm. The obtained coating film-attached aluminum plate was evaluated as a test specimen. The results are shown in Table 4.

**[Table 3]**

| Powder | | | (X-1) | (X-2) | (Y-1) | (Y-2) |
|---|---|---|---|---|---|---|
| Blend (parts by mass) | Fluororesin (A) | (A-1) | 56 | 65 | - | - |
| | Plasticizer | (1) | 11.3 | - | 11.3 | - |
| | Resin (C) | (C-1) | - | - | 56 | 65 |
| | Curing agent | (1) | 15 | 17.2 | 15 | 17.2 |
| | Curing catalyst | (1) | 0.0008 | 0.0008 | 0.0008 | 0.0008 |
| | Other components | Pigment | 12.7 | 14.3 | 12.7 | 14.3 |
| | | Degassing agent | 0.5 | 0.5 | 0.5 | 0.5 |
| | | Surface modifier A | 1.5 | 1 | 1.5 | 1 |
| | | Surface modifier B | 3 | 2 | 3 | 2 |

**[Table 4]**

| Ex. | | | 17 | 18 | 19 | 20 |
|---|---|---|---|---|---|---|
| Types of dry-blended powders | | | (X-1) | (X-2) | (X-1) | (X-2) |
| | | | (Y-1) | (Y-1) | (Y-2) | (Y-2) |
| Plasticizer | | Melting point [°C] | 118 | 118 | 118 | 118 |
| | | Content of plasticizer to 100 parts by mass of (A)+(C) [parts by mass] | 20 | 10 | 10 | 0 |
| Evaluation results | Coating film appearance | | ○ | ○ | ○ | × |
| | Surface smoothness | | ○ | ○ | ○ | x |
| | PCI | | 9 | 8 | 8 | 3 |
| | Blocking resistance | | ○ | ○ | ○ | ○ |
| | | | 5 | 5 | 5 | 5 |
| | 60 degree specular gloss | | ○ | ○ | ○ | ○ |
| | 60 degree specular gloss [%] | | 82 | 81 | 81 | 82 |
| | Accelerated weather resistance | | ○ | ○ | ○ | ○ |
| | Gloss retention [%] | | 82 | 81 | 83 | 85 |

According to the powder coating materials in Ex. 17 to 19 containing the plasticizer (B) in a range of from 0.1 to 40 parts by mass to 100 parts by mass of the resin component, it was possible to form a coating film excellent in coating film appearance without a defect such as cissing or wettability and also excellent in surface smoothness. Further, it was confirmed that the substrate was excellent in corrosion resistance.

Further, by a luster powder coating material containing a luster pigment, it was possible to form a coating film excellent in coating film appearance without color unevenness.

On the other hand, the coating film formed by the powder coating material in Ex. 20 containing no plasticizer (B) was poor in coating film appearance and surface smoothness.

### [Ex. 21]

Using the coating film-attached aluminum plate obtained in Ex. 7 as a test specimen, evaluation tests for the following corrosion evaluation A (neutral salt water resistance spray test) and corrosion evaluation B (Okinawa exposure test) were conducted.

At the cut flaw portions (crosscut portions) of the coating films after 4,000 hours of the neutral salt water resistance spray test, and after 2 years of the Okinawa exposure test, in each case, swelling of the coating film or occurrence of white rust of aluminum was not observed, and it was confirmed that corrosion resistance was excellent.

### <Corrosion evaluation A (neutral salt water resistance spray test)>

In accordance with JIS K 5600-7-1 (1999), corrosion of the aluminum plate was evaluated according to the following standards.

### <Corrosion evaluation B (Okinawa exposure test)>

Outdoors in Naha-city, Okinawa Prefecture, a test specimen prepared, was set and subjected to exposure for two years, whereupon swelling of the coating film or occurrence of white rust of aluminum at the cut flaw portion (cross-cut portion) of the coating film, was confirmed by visual observation.

### [Ex. 22]

Using, in place of the aluminum plate subjected to chromate treatment, an aluminum plate treated with a zirconium-type chemical conversion treatment agent "Chemibonder 5507" (trade name) containing no chromium (VI), manufactured by The Japan Cee-Bee Chemical Co., Ltd., the powder coating material obtained in Ex. 7 was applied by electrostatic coating using an electrostatic coating machine (GX3600C, manufactured by Onoda Cement Co., Ltd.) and then held in a 200°C atmosphere for 20 minutes. The coated product was left to cool to room temperature to obtain an aluminum plate provided with a coating film with a thickness of from 55 to 65 µm. Using the obtained coating film-attached aluminum plate as a test specimen, evaluation tests of the above-mentioned corrosion evaluation A and the corrosion evaluation B were conducted.

At the cut flaw portions (crosscut portions) of the coating films after 4,000 hours of the neutral salt water resistance spray test and after 2 years of the Okinawa exposure test, in each case, swelling of the coating film or occurrence of white rust of aluminum was not observed, and it was confirmed that the corrosion resistance was excellent.

### [Ex. 23 and Ex. 24]

By the following methods, luster powder coating material (1) and luster powder coating material (2) were prepared. Then, using these powder coating materials, coating film-attached aluminum plates were prepared, and color unevenness was evaluated.

### <Production of luster powder coating material (1)>

Into a three-necked flask with a capacity of 500 ml equipped with a thermometer, a stirrer and a dropping funnel, 100 parts by mass of the fluorinated powder coating material obtained in Ex. 7 and 5 parts by mass of an aluminum powder as a luster pigment (product name "PCF7620A" (manufactured by Toyo Aluminum K.K.)) were taken and while stirring at 100 rpm in a room temperature atmosphere, warmed to 45°C and mixed by stirring at 100 rpm for 1 hour, to obtain a luster powder coating material (1).

The particle surface of the luster powder coating material (1) was observed by a scanning electron microscope ("JSM-5900LV", manufactured by JEOL Ltd., 20 kV, 10,000-magnifications), whereby adhesion of the luster pigment (aluminum powder) on the particle surface of the fluorinated powder coating material was confirmed.

### <Production of luster powder coating material (2)>

Against the fluorinated powder coating material in Ex. 7, a fluorinated powder coating material containing no plasticizer (1) was prepared. To this fluorinated powder coating material, 5 parts by mass of aluminum powder as a luster pigment (trade name "PCF7620A" (manufactured by Toyo Aluminum K.K.)) was added, and while stirring at 100 rpm in a room temperature atmosphere, the mixture was warmed to 45°C and mixed by stirring at 100 rpm for 1 hour, to obtain a luster powder coating material (2).

The particle surface of the luster powder coating material (2) was observed by a scanning electron microscope ("JSM-5900LV", manufactured by JEOL Ltd., 20 kV, 10,000-magnifications), whereby it was confirmed that no luster pigment (aluminum powder) was adhered on the particle surface of the fluorinated powder coating material.

### <Preparation of test specimens>

Using the luster powder coating material (1), on one surface of an aluminum plate (vertical 1 m, horizontal 1 m, thickness 1 mm) subjected to chromate treatment, electrostatic coating was applied by using an electrostatic coating machine (trade name: GX3600C, manufactured by Onoda Cement Co., Ltd.) equipped with a powder coating gun, and then the coated product was held in a 200°C atmosphere for 20 minutes, then left to cool to room temperature, to obtain an aluminum plate (a) provided with a coating film (cured film) having a thickness of from 55 to 65 µm (Ex. 23). Further, using the luster powder coating material (2), in the same manner, an aluminum plate (b) provided with a coating film (cured film) having a thickness of from 55 to 65 µm was obtained (Ex. 24).

Using the obtained coating film-attached aluminum plate (a) and coating film (cured film)-attached aluminum plate (b) as test specimens, evaluation of color unevenness was carried out by the following standards.

As a result, it was confirmed that while with the coating film-attached aluminum plate (a), occurrence of color unevenness was at most 30% on the entire area of the test specimen, with the coating film-attached aluminum plate (b), occurrence of color unevenness was more than 30% on the entire area of the specimen, and abnormal appearance was observed.

### [Evaluation of color unevenness]

With respect to the test specimen, color unevenness of the coating film was evaluated by visual observation based on the following standards.
○ (good): Occurrence of color unevenness is at most 30% to the entire area of the test specimen.
× (bad): Occurrence of color unevenness is more than 30% to the entire area of the specimen.

### (Advantageous effects)

It is considered that since the plasticizer (B) was blended, the particle surface of the fluorinated powder coating material was softened, whereby the luster pigment (aluminum powder) became easy to adhere thereto. Accordingly, It is considered that the coating film appearance of the luster powder coating material was substantially improved.

The powder coating material of the present invention is useful particularly for coating of building exterior members (aluminum composite panels, aluminum panels for curtain walls, aluminum frames for curtain walls, aluminum window frames).

## Claims

1. A composition for powder coating material **characterized by** comprising a fluororesin having a fluorine content of at least 10 mass% and a plasticizer having a melting point, measured in accordance with the method described in the description under the heading (Melting point), of from 60 to 200°C and having a cyclic hydrocarbon group in the molecule, wherein
the content of the plasticizer is from 0.1 to 40 parts by mass, to 100 parts by mass of the resin component contained in the composition for powder coating material.

2. The composition for powder coating material according to Claim 1, which further contains a resin other than the fluororesin.

3. The composition for powder coating material according to Claim 2, wherein the resin other than the fluororesin, is at least one member selected from the group consisting of a fluororesin having a fluorine content of less than 10 mass%, an acrylic resin, a polyester resin, a polyurethane resin, an epoxy resin and a silicone resin.

4. The composition for powder coating material according to any one of Claims 1 to 3, wherein the fluororesin having a fluorine content of at least 10 mass%, is a fluororesin having hydroxy groups or carboxy groups.

5. The composition for powder coating material according to Claim 4, which further contains a curing agent.

6. The composition for powder coating material according to any one of Claims 1 to 3, wherein the fluororesin having a fluorine content of at least 10 mass%, is a polyvinylidene fluoride.

7. A powder coating material comprising a powder composed of the composition for powder coating material as defined in any one of Claims 1 to 6.

8. The powder coating material according to Claim 7, wherein the powder coating material comprises said powder and a luster pigment.

9. A coated article having a coating film formed of the powder coating material as defined in Claim 7 or 8, on the surface of a substrate.

10. The coated article according to Claim 9, wherein the 60 degree specular gloss of the coating film, measured in accordance with the method described in the description, is from 10 to 90%.

11. The coated article according to Claim 9 or 10, wherein the material of the substrate is aluminum or an alloy thereof.

## Patentansprüche

1. Zusammensetzung für Pulverbeschichtungsmaterial, **dadurch gekennzeichnet, dass** sie ein Fluorharz mit einem Fluorgehalt von mindestens 10 Massen-% und einen Weichmacher mit einem Schmelzpunkt, gemessen in Übereinstimmung mit dem in der Beschreibung unter der Überschrift (Schmelzpunkt) beschriebenen Verfahren, von 60 bis 200°C und mit einer zyklischen Kohlenwasserstoffgruppe in dem Molekül, umfasst, wobei
der Gehalt des Weichmachers von 0,1 bis 40 Massenteile, bezogen auf 100 Massenteile der in der Zusammensetzung für Pulverbeschichtungsmaterial enthaltenen Harzkomponente, beträgt.

2. Zusammensetzung für Pulverbeschichtungsmaterial nach Anspruch 1, die ferner ein anderes Harz als das Fluorharz enthält.

3. Zusammensetzung für Pulverbeschichtungsmaterial nach Anspruch 2, wobei das andere Harz als das Fluorharz mindestens ein Mitglied, ausgewählt aus der Gruppe, bestehend aus einem Fluorharz mit einem Fluorgehalt von weniger als 10 Massen-%, einem Acrylharz, einem Polyesterharz, einem Polyurethanharz, einem Epoxidharz und einem Silikonharz, ist.

4. Zusammensetzung für Pulverbeschichtungsmaterial nach einem der Ansprüche 1 bis 3, wobei das Fluorharz mit einem Fluorgehalt von mindestens 10 Massen-% ein Fluorharz mit Hydroxylgruppen oder Carboxylgruppen ist.

5. Zusammensetzung für Pulverbeschichtungsmaterial nach Anspruch 4, die ferner ein Härtungsmittel enthält.

6. Zusammensetzung für Pulverbeschichtungsmaterial nach einem der Ansprüche 1 bis 3, wobei das Fluorharz mit einem Fluorgehalt von mindestens 10 Massen-% ein Polyvinylidenfluorid ist.

7. Pulverbeschichtungsmaterial, umfassend ein Pulver, das aus der Zusammensetzung für Pulverbeschichtungsmaterial nach einem der Ansprüche 1 bis 6 zusammengesetzt ist.

8. Pulverbeschichtungsmaterial nach Anspruch 7, wobei das Pulverbeschichtungsmaterial das Pulver und ein Glanzpigment enthält.

9. Beschichteter Gegenstand mit einem aus dem Pulverbeschichtungsmaterial nach Anspruch 7 oder 8 gebildeten Beschichtungsfilm auf der Oberfläche eines Substrats.

10. Beschichteter Gegenstand nach Anspruch 9, wobei der 60-Grad-Spiegelglanz des Beschichtungsfilms, gemessen in Übereinstimmung mit dem in der Beschreibung beschriebenen Verfahren, von 10 und 90% beträgt.

11. Beschichteter Gegenstand nach Anspruch 9 oder 10, wobei das Material des Substrats Aluminium oder eine Legierung davon ist.

## Revendications

1. Composition pour matériau de revêtement en poudre **caractérisée par le fait qu'**elle comprend une résine fluorée présentant une teneur en fluor supérieure ou égale à 10 % en masse et un plastifiant présentant un point de fusion, mesuré selon le procédé décrit dans la description sous le chapitre (point de fusion), compris entre 60 et 200°C et présentant un groupe hydrocarboné cyclique dans la molécule, dans laquelle
la teneur en plastifiant est comprise entre 0,1 et 40 parties en masse pour 100 parties en masse du composant de résine contenu dans la composition du matériau de revêtement en poudre.

2. Composition pour matériau de revêtement en poudre selon la revendication 1, qui contient, en outre, une résine autre que la résine fluorée.

3. Composition pour matériau de revêtement en poudre selon la revendication 2, dans laquelle la résine autre que la résine fluorée est au moins un élément sélectionné à partir du groupe constitué par une résine fluorée présentant une teneur en fluor inférieure à 10 % en masse, une résine acrylique, une résine polyester, une résine polyuréthane, une résine époxyde et une résine de silicone.

4. Composition pour matériau de revêtement en poudre selon l'une quelconque des revendications 1 à 3, dans laquelle la résine fluorée présentant une teneur en fluor supérieure ou égale à 10 % en masse est une résine fluorée comportant des groupes hydroxy ou des groupes carboxy.

5. Composition pour matériau de revêtement en poudre selon la revendication 4, qui contient, en outre, un agent durcissant.

6. Composition pour matériau de revêtement en poudre selon l'une quelconque des revendications 1 à 3, dans laquelle la résine fluorée présentant une teneur en fluor supérieure ou égale à 10 % en masse est un fluorure de polyvinylidène.

7. Matériau de revêtement en poudre comprenant une poudre composée de la composition pour matériau de revêtement en poudre selon l'une quelconque des revendications 1 à 6.

8. Matériau de revêtement en poudre selon la revendication 7, dans lequel le matériau de revêtement en poudre comprend ladite poudre et un pigment de lustre.

9. Article revêtu comportant un film de revêtement formé du matériau de revêtement en poudre selon la revendication 7 ou 8, sur la surface d'un substrat.

10. Article revêtu selon la revendication 9, dans lequel le brillant spéculaire à 60 degrés du film de revêtement, mesuré selon le procédé décrit dans la description est compris entre 10 et 90%.

11. Article revêtu selon la revendication 9 ou 10, dans lequel le matériau du substrat est de l'aluminium ou un alliage de celui-ci.
